# EUROPEAN PATENT SPECIFICATION

(11) **EP 1 101 935 B1**
(45) Date of publication and mention of the grant of the patent: **17.03.2004**
(21) Application number: 00125114.9
(22) Date of filing: 17.11.2000
(51) Int. Cl.: F03D 11/04, B63B 35/00, B63B 27/10, F03D 1/06, E02B 17/00

(54) **METHOD AND VESSEL FOR INSTALLATION OF OFF-SHORE WINDMILLS**
METHODE UND SCHIFF ZUR INSTALLATION VON WINDKRAFTANLAGEN AUF SEE
METHODE ET NAVIRE POUR INSTALLER DES EOLIENNES EN MER

(30) Priority: 17.11.1999 DK 165199
(43) Date of publication of application: 23.05.2001
(73) Proprietor: Bonus Energy A/S, 7330 Brande (DK)
(72) Inventor: Stiesdal, Henrik, 7330 Brande (DK)
(74) Representative: Nielsen, Leif

(56) References cited:
- WO-A-99/43956
- DE-U- 20 010 086
- DE-U- 20 100 588
- GB-A- 2 327 970
- US-A- 2 959 015
- US-A- 5 037 241
- US-A- 5 398 478

## Description

The present invention concerns a method for installing off-shore windmills, a vessel for such installation as defined in the preamble of claims 1 and 8, respectively, and a windmill as defined in the preamble of claim 14.

Installation of windmills at sea is prior art. The first sea-based windmill farm was erected in 1991. On that occasion, caisson foundations were made in dry dock and then floated to the chosen position and submerged. Installation of the windmills occurred in the way that they were assembled completely in a close-lying harbour, transferred to barges, towed to the foundations, lifted upright and moved over onto the foundations.

Largely the same method was used in the next significant project. However, the caisson foundations were towed out on a barge instead of floating by themselves, and the mills were installed by main components, with tower, mill top and rotor in each their lift.

Single pile foundations were used in two later projects. The foundations were rammed and bored, respectively, into the underground, and here again the mills were installed by main components.

It is known that the methods used until now have a number of drawbacks. Primarily, the processes are relatively complicated and work intensive which are considerable disadvantages by off-shore works. Transport conditions and down time due to weather implies that the average cost per effective work hour is much higher than on shore. The complicated processes that have to occur in a certain succession also imply an increased risk of being surprised by bad weather or breakdown of machinery at an unpropitious time in the course of the project. Besides, it is a cost-raising factor that installation of foundations (bases) and windmills usually occur by two separate processes each giving cause to mobilisation costs.

It is known that work conditions at sea in general are much more difficult that on land. An often used comparison is that the costs per effective work hour is of the magnitude 10 times greater at sea than on land.

In a series of concept studies, alternatives to the known methods have been examined. The purpose has been to reduce the costs at a superior level, and more specifically this has been utilised in different proposals to methods where the known disadvantages are reduced. An example of such alternatives are proposals concerning floating of foundation and windmill in one step. The method is here that windmill and foundation are assembled on shore, for example in a dry dock or at a place where the foundation may be slid into the water. The necessary buoyancy is either provided by built-in buoyancy elements in the foundation itself or by temporary buoyancy elements which are fastened to the foundation during the floating.

A considerable drawback by assembled floating is that buoyancy elements of considerable size are required for providing the necessary buoyancy and stability. By windmills of the size expected to be installed at sea in larger number (windmills of or with more than 500 kW installed power), the buoyancy elements become substantially larger than those which may be integrated into a normal foundation within the usual economic limits. Therefore, it is necessary with temporary buoyancy elements which are to be of considerable size with the costs associated therewith. The handling of such elements at sea is no small task, and a part of the saving on the mounting of the mill is in danger of being lost by work on the buoyancy elements. Another substantial disadvantage is that the stability during the sinking on the selected site may raise problems. If the sinking occurs by letting in water or other ballast into the buoyancy elements, the float stability is typically impaired substantially, which implies an increased risk of capsizing. Unless there are favourable tide conditions so that the sinking may occur by simple grounding at low tide, where the necessary ballast may be supplied quickly for providing stability on the bottom, the stability problem during sinking will normally imply that a foundation with integrated, permanent buoyancy elements will need either complicated filling routines in mutually closed chambers or external stabilisation during sinking, e.g. support by a crane. For temporary buoyancy elements not integrated in the foundation, there will typically be a need for similar arrangements or, alternatively, the possibility of the sinking occurring by lowering from the buoyancy elements. However, the latter requires winch capacity on and a certain kind of mutual connection between the buoyancy elements as well as requirements for controlling the process will be considerable. A consequence of this is that insurance will only be possible on the background of very comprehensive descriptions of work and methods, model experiments, safety assessments etc. which may raise the costs of the process considerably.

It is known that offshore structures in other connections (oil and gas industry) in large units are lifted or pushed from quay onto floating vessels and then lifted in place at the desired location. However, here is normally talked about "topside" structures, i.e. the search or production unit itself, while the foundation has been established in advance. Other offshore structures, typically work and search platforms, are floating by themselves and may be towed to the desired location where they are either sunk or supported with legs according to jack-up like methods. However, here we are talking about temporary structures where the method itself differs considerably from the one which is disclosed here.

Finally, it is prior art, e. g. known from WO 99/43956 that offshore structures in one piece, with or without foundation, may be mounted on or at quay, lifted upon a transport vessel, towed to the installation locality and there, still in one piece, lifted to the final location. By the lift performed in this method, floating cranes are normally always used with sufficient lifting capacity, where the structure is suspended under a hook, and where the stability is secured by lifting in the approximately highest point of the structure, substantially above the centre of gravity. In a variant of this method, no transport vessel is used, and the floating crane itself carries the burden on the way from quay to the final location. The advantage of not using any transport vessel is that, by the lift at sea, relative movements between transport vessel and floating crane caused by sea may be disregarded. Methods of this kind normally have the very significant disadvantage that they depend on use of a floating crane the lifting capacity of which corresponds to the weight of the complete structure and the lifting height of which substantially exceeds the height of the structure to be installed. If this structure is a wind mill tower or a windmill, a lift over the top of the tower or the windmill is normally required. Typically, the height is here in the magnitude 60-100 m or more, and the requirements to the floating crane therefore become great, implying the supply of suited vessels becoming rather limited. The latter may imply considerable disadvantages with respect to availability at the desired time as well as the level of cost. The problem is worsened if the floating crane itself carries the load on the way from quay to the final location. Here, the floating crane performs a function that otherwise may be performed by a much cheaper vessel which is less in demand.

The object of the invention is to provide a method for installing windmills at sea, which minimises costs and risk, and which avoids the drawbacks connected with installation by the methods known hitherto.

This is achieved by a method and a vessel of the kind mention in introduction which have the characteristics indicated in claims 1 and 8, respectively, and a windmill with the characteristics indicated in claim 14.

Hereby is achieved that the vessel used is adapted to the structure in the way that it has a lifting height which is substantially reduced in relation to the lifting height of a normal floating crane and which may be made as a temporary installed structure on a standard vessel.

Compared with prior art, the invention implies a number of advantages.

Windmill and foundation may be mounted as a unit on land or at quay, and all mounting of cables and other accessories may be finished. Depending on the type of base (foundation) and other circumstances, even the possibility of test running on land may be achieved. Compared with the prior art methods, a very significant advantage is hereby achieved. Work as well as test running may occur under normal, favourable work and safety conditions and with much lower cost than at sea. Possible faults may also be repaired with far less costs. Landbased crane assistance may be provided at normal rates if necessary.

Windmill and base may be shipped in one piece, typically by the same vessel performing lifting as well as transport and installation. This may occur with the mill tower oriented largely vertically without requirements of very high floating cranes and with the possibility of not damaging the mill construction which is the risk if transported horizontally and raised at the location for installing. Hereby, compared with an arrangement with floating from a dry dock, is achieved the significant advantage that standardised vessels and tools may be used, and that temporary buoyancy elements do not have to be dismounted under difficult conditions at sea. Compared with arrangements where the windmill is erected piece by piece at the location at sea, by the invention is achieved the advantage that the number of working hours at sea are reduced to the least possible.

Compared with an installation with floating crane of a complete windmill with base, there is achieved the very significant advantage that the vessel required according to the method may have a lifting height which is considerably reduced compared with the lifting height for a normal floating crane. A further advantage is that the structure may be made as one or more separate units that may be mounted on a standard vessel, for example a standard offshore barge. Thereby, the prior art disadvantages concerning availability at the desired time and cost level for normal floating cranes are very much reduced. Compared with installation methods where the windmills are transported on separate vessels, there is achieved the advantage at the lifting at sea that relative movements between transport vessel and floating crane caused by sea may be disregarded. Compared with the method where the transport at sea is performed with a normal floating crane and where the problems with relative movements are also avoided, the invention has the significant advantage that an expensive unit in demand, like a floating crane, is not to be used for pure transportation purposes.

Advantageous embodiments of the invention are described in the independent claims.

The invention is described more closely in the following as reference is made to the accompanying schematic drawing, where:
- Fig. 1: shows a vessel according to the invention supporting a windmill according to the invention,
- Fig. 2: illustrates different steps in a method according to the invention when using the vessel shown in Fig. 1,
- Fig. 3: shows a second embodiment of a vessel according to the invention supporting a windmill according to the invention, and
- Fig. 4: illustrates different steps in a method according to the invention by using the shown vessel in Fig. 3.

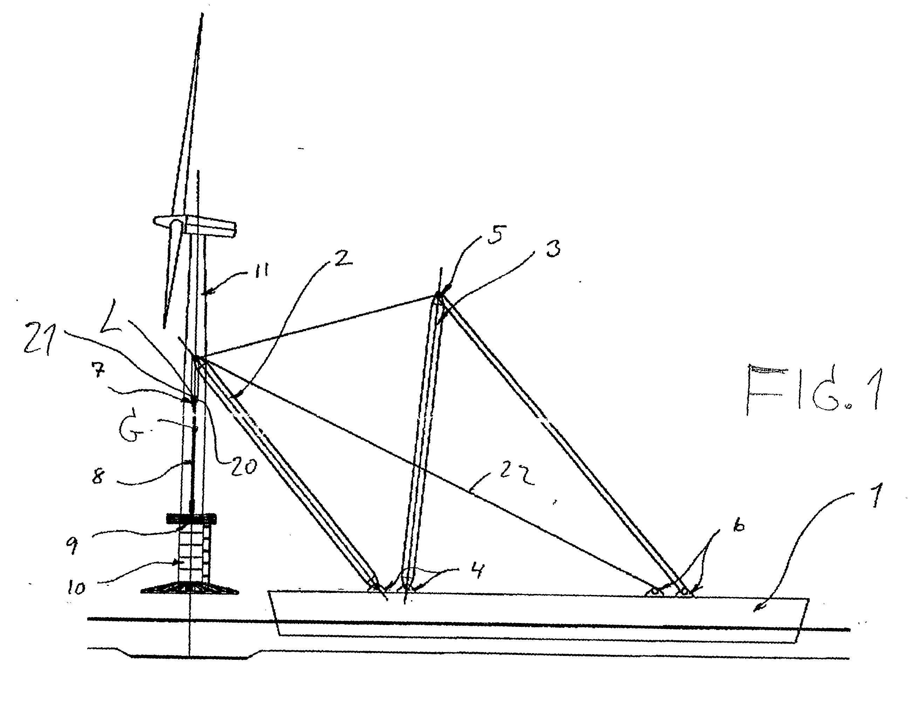

Figure 1 shows a vessel made according to the invention. On a standard offshore barge 1, e.g. with the dimensions 90 x 30 m, there is mounted two pairs of derricks, a front pair 2 and a rear pair 3. The derricks are identical and suspended by identical bearings 4 fastened to the deck of the vessel. At their upper ends, the derricks carry a tackle arrangement 5. With suitable winches 6 the relative orientation of the derricks to vertical may be adjusted, and the suspended load may be hauled up and down. On the windmill, immediately over the centre of gravity G of the total structure, there are provided connecting means 20 on the tower at a position L interacting with connecting means 21 at the end of a wire 22 running in the tackle arrangement 5. On the tower there is fastened a guide 7 ensuring that the lifting rods 8 may attack at a position on the structure with sufficient carrying capability, even if this is below the centre of gravity, as e.g. here in the transition 9 between the foundation or base 10 and the windmill 11.

The vessel 1 is here a standard vessel of which the supply on the charter market is considerable and the prices moderate. The lifting arrangement in the shape of derricks 2-3, bearings 4 and winches 6 here constitute a separate unit which may be mounted on and dismounted from the standard vessel.

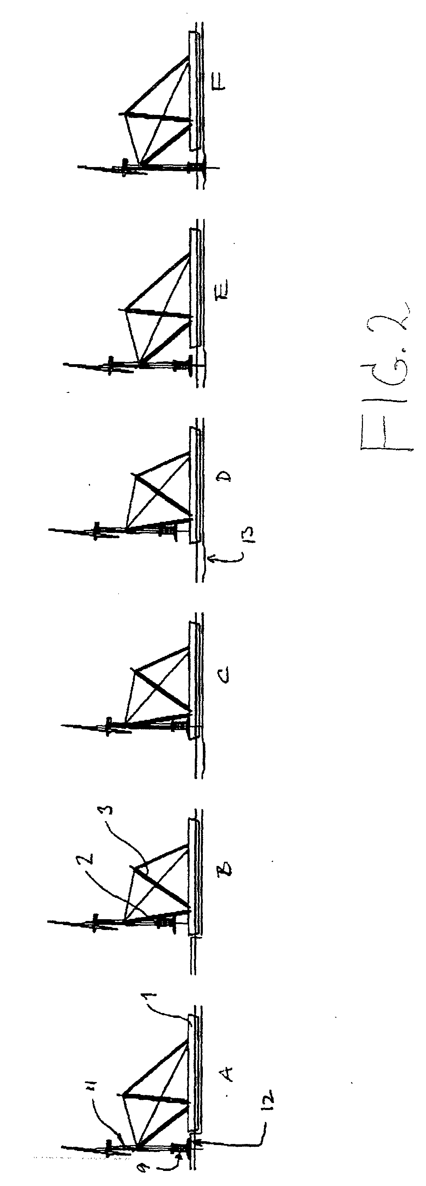

Figure 2 shows an installation sequence using the vessel from Figure 1. At pos. A the windmill 11 is seen erected on its base 9 on a quay 12. The vessel 1 is towed to the quay, and engagement has been made for lifting. At pos. B the windmill is lifted and the derricks are adjusted so that the windmill is placed over the deck of the vessel. At pos. C the windmill is lowered for resting on the deck, and the vessel is towed to the sea. At pos. D, the lift for installation is initiated at the previously prepared location 13. At pos. E, the derricks are adjusted again so that the windmill is positioned over its final location. At pos. F, the windmill is lowered onto its location.

The lifting arrangement described in Figure 1 is based on separate, centrally actuated derricks and winches which largely distributes the load on the vessel as a series of point loads without any moments. By an alternative version, the lifting arrangement may be embodied as one unit, or a small number of units, which by their fastening act on the vessel with a moment but which in return are easily mounted and dismounted.

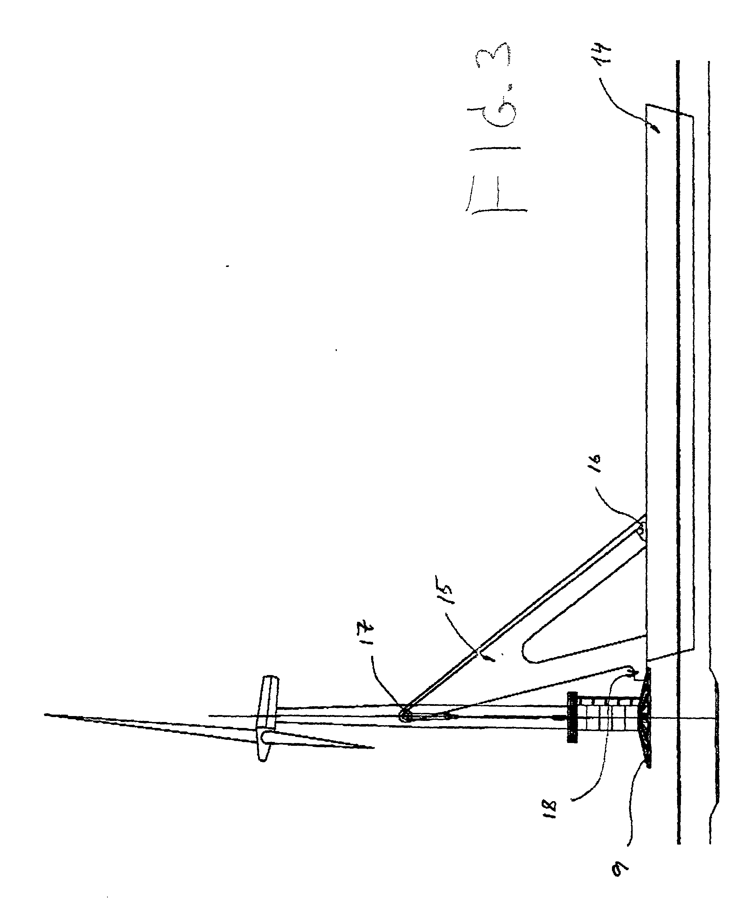

A lifting arrangement of this character is shown in Figure 3. A vessel 14 is provided with a steel construction 15 having a winch 16 and a tackle arrangement 17 which enables lifting of the windmill in the same way as previously indicated. A cantilever part 18 enables fixing the base 9 to the construction 15 when the windmill is lifted from the quay. This fixation provides the greatest possible stability during the sea transportation.

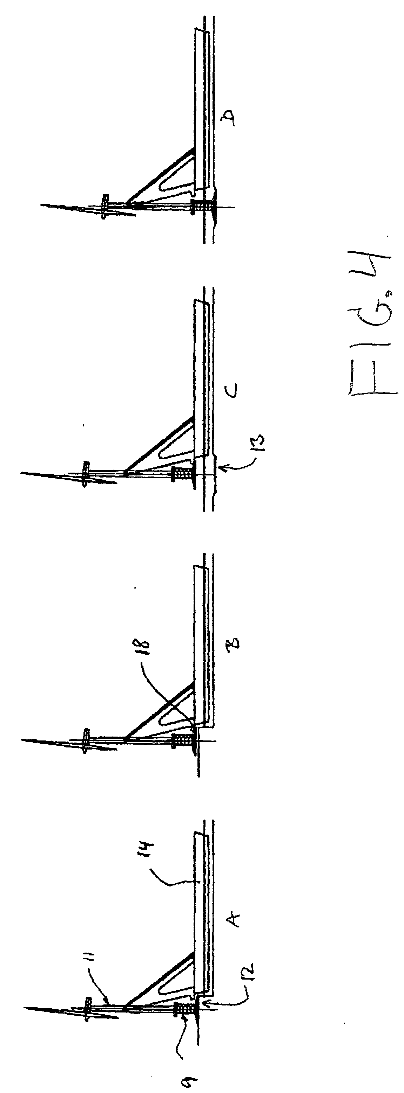

Figure 4 shows an installation sequence using the vessel of Figure 4. At pos. A the windmill 11 is seen erected on its base 9 on a quay 12. The vessel 14 is towed to the quay, and engagement is made for lifting. At pos. B the windmill is lifted, and the base is fastened to the cantilever part 18. At pos. C the vessel is towed to the previously prepared location 13, and the windmill is positioned over its final location. At pos. D the windmill is lowered upon its location.

## Claims

1. A method for erecting off-shore windmills where main components for wind-mill(ll) and base(10) are assembled into one unit at a location other than the final location, and where the pre-assembled unit subsequently is shipped to and placed at the final location, **characterised in that** the unit is held with a largely vertical orientation of the tower of the mill and is supported at a point(L) on the tower of the mill over the centre of gravity(G) of the unit when lifting the unit during shipping and installation and **in that** a lifting rod(8) is used which interacts with a guide(7) fastened to the windmill tower so that the lifting effect attacks at a position on the unit with sufficient carrying capability below the centre of gravity(G) of the unit.

2. A method for erecting off-shore windmills according to claim 1, **characterised in that** during transport the unit is suspended by a support construction on a vessel(1) so that it is transported with the underside of the base(10) largely at sea level at a position inside or outside the vessel.

3. A method for erecting off-shore windmills according to claim 1, **characterised in that** during transport the unit is supported with the base against a surface on the vessel.

4. A method according to any preceding claim, **characterised in that** the transport occurs without use of separate buoyancy elements.

5. A method according to any preceding claim, **characterised in that** the base(10) of the windmill is formed by a gravitational base.

6. A method according to any preceding claim, **characterised in that** the base of the windmill at least partly is formed by piles.

7. A method according to any preceding claim, **characterised in that** lifting is performed at a position substantially below the top of the mill, preferably at the lower half of the mill construction.

8. A combination of a vessel for erecting off-shore windmills and a windmill, where main components of windmill(11) and base(10) are assembled into one unit at a location other than the final location, and where the pre-assembled unit subsequently is shipped to and placed at the final location as the unit is held with a largely vertical orientation of the tower of the mill when lifting the unit during shipping and installation, wherein the vessel(1) comprises a support construction(4) with a lifting unit(2,3,5,6,22) comprising connecting elements(21) arranged for interacting with corresponding connecting elements(20) which are situated on the mill tower at a position above the centre of gravity(G) of the unit, **characterised in that** the vessel comprises lifting rods(8) interacting with a guide(7) fastened to the mill tower and lifting the unit at a position with sufficient carrying capability, below the centre of gravity(G) of said unit, and that the support construction having a greatest height substantially below the height of the top of the mill(11).

9. A combination according to claim 8, **characterised in that** the support construction(4) and the lifting unit(2,3,5,6,22) completely or partly constitute a separate unit.

10. A combination according to claim 8 or 9, **characterised in that** the lifting unit(2,3,5,6,22) mainly comprises centrally actuated derricks(2, 3) suspended on bearing pedestals and a winch(6) used for actuating the derricks.

11. A combination according to claims 8, 9 or 10, **characterised in that** the lifting unit(2,3,5,6,22) comprises a cantilever structure that may be fitted and detached from a standard vessel(1).

12. A combination according to any of claims 8 - 11, **characterised in that** the support construction and the lifting unit constitute an assembly that may be fitted and detached from a standard vessel essentially in one piece.

13. A combination according to claim 12, **characterised in that** the unit comprising the support construction and the lifting unit are, fastened to the vessel with screw bolts, welding, ballast, or a combination of these methods.

14. A windmill for erection at sea where the main components for windmill (11) and base (10) are assembled into one unit at a location other than the final location, and where the pre-assembled unit subsequently is shipped to and placed at the final location, wherein said windmill has connecting elements (20) on its tower in a position over the centre of gravity (G) of the unit, **characterised in that** the windmill comprises a lifting rod guide (7) fastened to the windmill tower and a lifting rod (8) having attacking points at a position with sufficient carrying capability below the centre of gravity (G) of the unit.

## Patentansprüche

1. Verfahren zum Errichten von Off-Shore-Windmühlen, bei dem die Hauptkomponenten der Windmühle (11) und des Sockels (10) an einem anderen Ort als dem endgültigen Aufstellungsort zu einer Einheit montiert werden und die vormontierte Einheit anschließend zum endgültigen Aufstellungsort verschifft und an diesem errichtet wird, **dadurch gekennzeichnet, dass** die Einheit mit einer im wesentlichen vertikalen Ausrichtung des Mühlenturms gehalten und an einem Punkt (L) am Mühlenturm oberhalb des Schwerpunktes (G) der Einheit gestützt wird, wenn die Einheit während des Verschiffens und während der Installation angehoben wird, und dass eine Hebestange (8) verwendet wird, welche mit einer am Mühlenturm befestigen Führung derart zusammenwirkt, dass die Hebewirkung an einer Stelle der Einheit mit ausreichender Tragekapazität unterhalb des Schwerpunktes (G) der Einheit angreift.

2. Verfahren zum Errichten von Off-Shore-Windmühlen nach Anspruch 1, **dadurch gekennzeichnet, dass** die Einheit während des Transportes von einer Stützkonstruktion auf einem Schiff (1) derart herabhängt, dass sie mit der Unterseite des Sockels (10) im wesentlichen auf Seehöhe in einer Position innerhalb oder außerhalb des Schiffes (1) transportiert wird.

3. Verfahren zum Errichten von Off-Shore-Windmühlen nach Anspruch 1, **dadurch gekennzeichnet, dass** die Einheit während des Transportes mit dem Sockel an einer Oberfläche des Schiffes abgestützt wird.

4. Verfahren nach mindestens einem der vorhergehenden Ansprüche, **dadurch gekennzeichnet, dass** der Transport ohne Verwendung weiterer Auftriebselemente erfolgt.

5. Verfahren nach mindestens einem der vorhergehenden Ansprüche, **dadurch gekennzeichnet, dass** der Sockel (10) der Windmühle von einem Schwerpunktsockel gebildet ist.

6. Verfahren nach mindestens einem der vorhergehenden Ansprüche, **dadurch gekennzeichnet, dass** der Sockel der Windmühle zumindest abschnittsweise durch Pfähle gebildet ist.

7. Verfahren nach mindestens einem der vorhergehenden Ansprüche, **dadurch gekennzeichnet, dass** das Anheben an einer Stelle im wesentlichen unterhalb der Spitze der Mühle, vorzugsweise an der unteren Hälfte der Mühlenkonstruktion, durchgeführt wird.

8. Kombination aus einem Schiff zum Errichten von Off-Shore-Windmühlen und einer Windmühle, wobei die Hauptkomponenten der Windmühle (11) und des Sockels (10) an einem anderen Ort als dem endgültigen Aufstellungsort zu einer Einheit montiert werden und die vormontierte Einheit anschließend zum endgültigen Aufstellungsort verschifft und an diesem errichtet wird, während die Einheit mit einer im wesentlichen vertikalen Ausrichtung des Mühlenturms gehalten wird, wenn die Einheit während des Verschiffens und während der Installation angehoben wird, wobei das Schiff (1) eine Stützkonstruktion (4) mit einer Hebeeinheit (2, 3, 5, 6, 22) aufweist, welche Verbindungselemente (20) umfaßt, die zum Zusammenwirken mit zugeordneten, an einer Stelle oberhalb des Schwerpunktes (G) der Einheit am Mühlenturm angeordneten Verbindungselementen (20) vorgesehen sind, **dadurch gekennzeichnet, dass** das Schiff Hebestangen (8) aufweist, welche mit einer am Mühlenturm befestigten Führung (7) zusammenwirken und die Einheit an einer Stelle mit ausreichender Tragfähigkeit unterhalb des Schwerpunktes (G) der Einheit anheben, und dass die Stützkonstruktion eine maximale Höhe aufweist, welche im wesentlichen geringer als die Höhe der Spitze der Mühle (11) ist.

9. Kombination nach Anspruch 8, **dadurch gekennzeichnet, dass** die Stützkonstruktion (4) und die Hebeeinheit (2, 3, 5, 6, 22) vollständig oder teilweise eine separate Einheit bilden.

10. Kombination nach Anspruch 8 oder 9, **dadurch gekennzeichnet, dass** die Hebeeinheit (2, 3, 5, 6, 22) im wesentlichen mittag angelenkte Ausleger (2, 3), die an Lagerböcken aufgehängt sind, und eine Winde (6) aufweist, welche zum Betätigen der Ausleger dient.

11. Kombination nach mindestens einem der Ansprüche 8, 9 oder 10, **dadurch gekennzeichnet, dass** die Hebeeinheit (2, 3, 5, 6, 22) einen Auslegeraufbau aufweist, welcher an einem herkömmlichen Schiff (1) befestigt oder von diesem gelöst werden kann.

12. Kombination nach mindestens einem der Ansprüche 8 bis 11, **dadurch gekennzeichnet, dass** die Stützkonstruktion und die Hebeeinheit eine Anordnung bilden, welche im wesentlichen einstückig an einem herkömmlichen Schiff ( 1 ) befestigt oder von diesem gelöst werden kann.

13. Kombination nach Anspruch 12, **dadurch gekennzeichnet, dass** die die Stützkonstruktion und die Hebeeinheit umfassende Einheit an dem Schiff durch Schraubenbolzen, durch Schweißen, durch Ballast oder einer Kombination dieser Verfahren befestigt ist.

14. Windmühle zum Errichten auf See, bei der die Hauptkomponenten der Windmühle (11) und des Sockels (10) an einem anderen Ort als dem endgültigen Aufstellungsort zu einer Einheit montiert werden und die vormontierte Einheit anschließend zum endgültigen Aufstellungsort verschifft und an diesem errichtet wird, wobei die Windmühle an ihrem Turm an einer Stelle oberhalb des Schwerpunktes (G) der Einheit Verbindungselemente (20) aufweist, **dadurch gekennzeichnet, dass** die Windmühle eine am Mühlenturm befestigte Hebestangen-Führung (7) und eine Hebestange (8) umfaßt, welche Angriffspunkte an einer Stelle mit ausreichender Tragfähigkeit unterhalb des Schwerpunktes (G) der Einheit hat.

## Revendications

1. Procédé pour ériger des éoliennes marines où des composants principaux pour éolienne (11) et un socle (10) sont assemblés en une unité au niveau d'un emplacement autre que l'emplacement final, et où l'unité pré-assemblée est ultérieurement expédiée vers et placée au niveau de l'emplacement final, **caractérisé en ce que** l'unité est maintenue avec une orientation largement verticale du pylône de l'éolienne et est supportée au niveau d'un point (L) sur le pylône de l'éolienne sur le centre de gravité (G) de l'unité lorsque l'on soulève l'unité pendant l'expédition et l'installation et **en ce qu'**une barre de levage (8) est utilisée qui interagit avec un guide (7) fixé au pylône de l'éolienne afin que l'effet de levage attaque au niveau d'une position sur l'unité avec une charge utile suffisante en dessous du centre de gravité (G) de l'unité.

2. Procédé pour ériger des éoliennes marines selon la revendication 1, **caractérisé en ce que** pendant le transport l'unité est suspendue par une construction de support sur un vaisseau (1) afin qu'elle soit transportée avec la sous-face du socle (10) largement au niveau de la mer au niveau d'une position à l'intérieur ou à l'extérieur du vaisseau.

3. Procédé pour ériger des éoliennes marines selon la revendication 1, **caractérisé en ce que** pendant le transport l'unité est supportée avec le socle contre une surface sur le vaisseau.

4. Procédé pour ériger des éoliennes marines selon l'une quelconque des revendications précédentes, **caractérisé en ce que** le transport survient sans utilisation d'éléments flottables séparés.

5. Procédé pour ériger des éoliennes marines selon l'une quelconque des revendications précédentes, **caractérisé en ce que** le socle (10) de l'éolienne est formé par un socle gravitationnel.

6. Procédé pour ériger des éoliennes marines selon l'une quelconque des revendications précédentes, **caractérisé en ce que** le socle de l'éolienne est au moins partiellement formé de pieux.

7. Procédé pour ériger des éoliennes marines selon l'une quelconque des revendications précédentes, **caractérisé en ce que** le levage est exécuté au niveau d'une position sensiblement en dessous du sommet de l'éolienne, de préférence au niveau de la moitié inférieure de la construction de l'éolienne.

8. Combinaison d'un vaisseau pour ériger des éoliennes marines et une éolienne, où des composants principaux pour éolienne (11) et un socle (10) sont assemblés en une unité au niveau d'un emplacement autre que l'emplacement final, et où l'unité pré-assemblée est ultérieurement expédiée vers et placée au niveau de l'emplacement final, alors que l'unité est maintenue avec une orientation largement verticale du pylône de l'éolienne lorsque l'on soulève l'unité pendant l'expédition et l'installation, dans laquelle le vaisseau (1) comprend une construction de support (4) avec une unité de levage (2, 3, 5, 6, 22) comprenant des éléments de connexion (21) agencés pour interagir avec des éléments de connexion correspondants (20) qui sont situés sur le pylône de l'éolienne au niveau d'une position au-dessus du centre de gravité (G) de l'unité, **caractérisée en ce que** le vaisseau comprend des barres de levage (8) interagissant avec un guide (7) fixé au pylône de l'éolienne et soulevant l'unité au niveau d'une position avec une charge utile suffisante en dessous du centre de gravité (G) de ladite unité, et **en ce que** la construction de support présente une hauteur supérieure sensiblement en dessous de la hauteur du sommet de l'éolienne (11).

9. Combinaison selon la revendication 8, **caractérisée en ce que** la construction de support (4) et l'unité de levage (2, 3, 5, 6, 22) constituent complètement ou partiellement une unité séparée.

10. Combinaison selon la revendication 8 ou 9, **caractérisée en ce que** l'unité de levage (2, 3, 5, 6, 22) comprend principalement des mâts de charge (2, 3) actionnés suspendus sur des chaises de palier et un treuil (6) utilisé pour actionner les mâts de charge.

11. Combinaison selon la revendication 8, 9 ou 10, **caractérisée en ce que** l'unité de levage (2, 3, 5, 6, 22) comprend une structure en porte-à-faux qui peut être installée sur et détachée d'un vaisseau standard (1).

12. Combinaison selon l'une quelconque des revendication 8 à 11, **caractérisée en ce que** la construction de support et l'unité de levage constitue un ensemble qui peut être installé sur et détaché d'un vaisseau standard essentiellement en un morceau.

13. Combinaison selon la revendication 12, **caractérisée en ce que** l'unité comprenant la construction de support et l'unité de levage sont fixées au vaisseau par des boulons à vis, soudage, lest ou combinaison de ces procédés.

14. Eolienne pour érection au niveau de la mer où les composants principaux pour l'éolienne (11) et le socle (10) sont assemblés en une unité au niveau d'un emplacement autre que l'emplacement final, et où l'unité pré-assemblée est ultérieurement expédiée vers et placée au niveau de l'emplacement final, dans laquelle ladite éolienne présente des éléments de connexion (20) sur son pylône dans une position sur le centre de gravité (G) de l'unité, **caractérisée en ce que** l'éolienne comprend un guide de barre de levage (7) fixé au pylône de l'éolienne et une barre de levage (8) présentant des points d'attaque au niveau d'une position avec une charge utile suffisante en dessous du centre de gravité (G) de l'unité.
